# EUROPEAN PATENT APPLICATION

(11) **EP 2 947 967 A1**
(43) Date of publication of application: **25.11.2015**
(21) Application number: 14169384.6
(22) Date of filing: 22.05.2014
(51) Int. Cl.: H05B 37/02

(54) **System combining an audio mixing unit and a lighting control unit**

(71) Applicant: Martin Professional ApS, 8200 Århus N (DK)
(72) Inventor: Hinrichs, Matthias, Prior Lake, MN Minnesota 55372 (US); Allan, Simon, Ashford, Kent (GB)
(74) Representative: Bertsch, Florian Oliver

(57) **Abstract**

The present invention relates to a system configured to control a lighting of at least one light fixture (310 to 314), wherein the system comprises an audio mixing unit (200) configured to mix audio signals, at least one actuating element (260) provided to control the lighting of the at least one light fixture and a first processing unit (220) configured to determine an operating status of the at least one actuating element. The system furthermore comprises a light control unit (100) configured to generate a light control signal for the at least one light fixture (310 to 314). The user of the system can use the actuating elements of the audio mixing unit (200) to control the lighting control unit (100).

## Description

### Technical Field

The present invention relates to a system configured to control a lighting of at least one light fixture and to a method for controlling the lighting of the light fixture.

The invention furthermore relates to a system configured to control a video image of at least one video screen.

### Background

In the art audio mixing units are known which are used to mix a large number of audio input channels and which are able to generate audio signal outputs by combining and processing the different audio input channels as needed.

In many applications light effects are used in combination with audio events, e.g. in theatres, in concerts and discotheques or shows. The lighting of a certain scene is a complex process and normally a plurality of light fixtures is combined for the generation of light effects. For the control of the lighting of a scene, lighting control units are known where the different light fixtures are controlled.

Recently, systems have been developed in which an audio mixing unit additionally comprises an interface with which light control signals can be exchanged with the light fixtures. These systems comprise actuating elements which are dedicated for the control of the light fixtures.

Furthermore, personal computer- or software-based lighting control units are known in which a standard personal computer (PC) or tablet is used to run a light control software. These software-based lighting control units use a display to provide a user of such a system with the capability to control different light parameters and different light fixtures. In these software-based systems, virtual actuating elements are generated on the display and a user of the system can manipulate the actuating elements either by touching the display or by using other input elements such as a mouse or a keypad. However, these systems do not have physical actuating elements such as faders or rotary knobs with which the lighting or several light fixtures can be controlled easily.

Additionally, media servers are known which are used for media composing and playback of video images that can be projected onto video screens. Often, video images are used in connection with light effects in concerts or shows. These media servers are also often controlled using a personal computer or software-based control unit where a display is used to provide a user input. The control units for these media servers often do not have physical actuating elements with which the video images to be presented on a video screen can be controlled easily.

### Summary

Accordingly, need exists to improve the usability of these lighting control units which do not have their own physical actuating elements. Furthermore, a need exists to effectively control a media server.

These needs are met by the features of the independent claims. Further aspects are described in the dependant claims.

According to a first aspect, a system is provided configured to control a lighting of at least one light fixture. The system comprises an audio mixing unit configured to mix audio signals. The audio mixing unit comprises a plurality of audio inputs for receiving audio input signals and at least two audio outputs for outputting mixed audio output signals. The audio mixing unit furthermore comprises at least one actuating element provided to control the lighting of the at least one light fixture. The audio mixing unit furthermore comprises a first processing unit configured to determine an operating status of the at least one actuating element. The system furthermore comprises a lighting control unit configured to generate a light control signal for the at least one light fixture. The audio mixing unit comprises a first transmitter configured to transmit the determined status of the at least one actuating element to the lighting control unit. The lighting control unit is configured to generate the light control signal based on the received operating status of the at least one actuating element at the audio mixing console. The system comprises a light control interface configured to generate a light command used to control the lighting of the at least one light fixture based on a light control protocol and based on the light control signal.

In the present system the audio mixing unit comprising actuating elements is combined with a lighting control unit, e.g. a purely software-based lighting control unit which is run on a personal computer or a desktop computer without dedicated actuating elements for controlling the light fixtures. The actuating elements of the audio mixing unit may be dedicated for light control, however, the actuating elements may also play a dual role dependant on the operating status of the audio mixing unit. In one of the operating modes one or some of the operating elements may be used to control audio signals whereas in another operating mode the same operating element or elements are used for the control of the at least one light fixture. The system combines the two units and the mechanical actuating elements provided on the audio mixing unit can be used to easily control the at least one light fixture. The audio mixing unit plays a role of a remote control and provides the haptic that facilitates the control of the light fixtures. The lighting control unit is not restricted to a purely software-based lighting control unit. The lighting control unit may also contain its own haptic operating elements. The audio mixing unit may contain the light control interface and the lighting control unit can comprise a second transmitter configured to transmit the light control signal to the audio mixing unit. In this embodiment, the light command is generated at the audio mixing unit and the light control interface at the audio mixing unit can transform the light control signal into the light command in accordance with the light control protocol, the light control interface being furthermore configured to transmit the light commands to the at least one light fixture, e.g. via the first transmitter of the audio mixing unit.

Furthermore, it is possible that the lighting control unit comprises the light control interface which transforms the light control signal into the light command in accordance with the light control protocol, the light control interface at the lighting control unit being configured to transmit the light command to the at least one light fixture, either directly or via the audio mixing unit.

In this embodiment, the audio mixing unit does not necessarily contain a light control interface. Without the light control interface, the audio mixing unit only plays the role of providing the actuating elements. When the audio mixing unit comprises a light control interface, the audio mixing unit can also directly generate light control signals based on actuation of the actuating elements and can transmit the commands directly to the light fixtures.

The lighting control unit can furthermore comprise a display and a second processing unit. The second processing unit can generate a graphical representation of a virtual actuating element on a display of the lighting control unit and the graphical representation of the virtual actuating element on the display is used to control the lighting of the at least one light fixture at the lighting control unit. When the lighting control unit uses a display, the display can be used by a user of the lighting control unit to adapt the virtual actuating elements on the display. As the use of real actuating elements is more convenient, the user can use the actuating elements provided on the audio mixing unit to adapt a function of the at least one light fixture. When a user of the audio mixing unit amends an operating status of an actuating element, e.g. by moving a fader, by rotating a knob or by pressing buttons, this change of the operating status is detected and transmitted to the lighting control unit where the light control signal is generated in accordance with the received operating status of the actuating element.

The second transmitter e.g. the transmitter of the lighting control unit may transmit the generated light control signal which was generated based on the operating status on the audio mixing unit back to the audio mixing unit. The audio light control interface at the audio mixing unit may then transform the light control signal into the light command in accordance with the light control signal and the light control protocol. In the following, the light control interface at the audio mixing unit will also be named first light control interface, the light control interface at the lighting control unit being the second light control interface. The first light control interface at the audio mixing unit can then transmit the command to the at least one light fixture. In this embodiment, the actual command used to control the light fixture is generated at the audio mixing unit. In another embodiment, the lighting control unit also comprises a light control interface, the second light control interface which is configured to generate the light command based on the light control protocol. When the lighting control unit has generated the light control signal, the light control interface at the lighting control unit can transform the light control signal into the light command in accordance with the light control protocol and the light control interface at the lighting control unit transmits the command to the at least one light fixture. In this embodiment the lighting control unit directly transmits the light command to the light fixture.

The first transmitter at the audio mixing unit and the second transmitter at the lighting control unit can each be configured to transmit USB signals or other forms of digital communication. This means that the audio mixing unit and the lighting control unit are connected using a USB connection, each of the units comprising in addition to the transmitter a receiver capable to process USB signals. The transmitted signals may contain the light control signal and/or the determined operating status.

Another possibility is to connect both units using an ethernet connection in which each unit has a transmitter and a receiver configured to transmit ethernet-based signals.

The user of the lighting control unit can still control the light fixtures using the virtual actuating elements displayed on the display of the lighting control unit. The processing unit of the lighting control unit can be configured to identify an amendment of the graphical representation of the actuating element on the display. The processing unit can then generate an actuator control signal based on the amendment of the graphical representation. The transmitter at the lighting control unit transmits the actuator control signal to the audio mixing unit at which an actuator control unit controls the actuating element based on the received actuator control signal. When a user amends an operating status of a light parameter at the lighting control unit on the display, this amendment is transmitted to the audio mixing unit where the same amendment of the haptic actuating element is carried out. By way of example, when a user moves a fader on the screen of the lighting control unit, this movement is also carried out at the actuating element of the audio mixing unit without someone touching the actuating element at the audio mixing unit.

The light control interface at the audio mixing unit can be designed in such a way that the light command is a digital multimedia control command, e.g. a DMX control command based on the DMX protocol.

Preferably, the lighting control unit and its processing unit are designed in such a way that all the possible functions of at least one light fixture are controlled using the graphical representations of virtual actuating elements on the screen. Thus, the lighting control unit is a pure software-defined control unit without dedicated haptic actuating elements.

According to a further aspect, a method for controlling a lighting of at least one light fixture is provided by a system, the method comprising the steps of determining a status of the at least one actuating element of the audio mixing unit. The determined operating status is transmitted to the lighting control unit where the light control signal is generated based on the received operating status of the actuating element at the audio mixing unit. Furthermore, a light command is generated from the light control signal based on the light control protocol and the light command is transmitted to the at least one light fixture.

As mentioned above, the light command may be generated at the audio mixing unit or at the lighting control unit.

According to another aspect, a system is provided configured to control a video image of at least one video screen, the system comprising an audio mixing unit configured to mix audio signals, the audio mixing unit comprising a plurality of audio inputs for receiving audio input signals, at least two audio outputs for outputting mixed audio output signals, at least one actuating element provided to control the video image of the at least one video screen. The audio mixing unit furthermore comprises a first processing unit configured to determine an operating status of the at least one actuating element. The system furthermore comprises a media server configured to generate a video control signal for the at least one video screen. The audio mixing unit comprises a first transmitter configured to transmit the determined status of the at least one actuating element to the media server, wherein the media server is configured to generate the video control signal based on the received operating status of the at least one actuating element at the audio mixing unit. The system furthermore comprises a video interface configured to generate a video command used to control the video image of the at least one video screen based on a video control protocol and based on the video control signal.

In this embodiment, the media server may be controlled by the actuating elements of the audio mixing unit.

The audio mixing unit may comprise the video interface and the media server can comprise a second transmitter configured to transmit the video control signal to the audio mixing unit where the video interface transforms the video control signal into the video command in accordance with the video control protocol. The video interface then transmits the video commands to the at least one video screen. In another embodiment the video server comprises the video interface which generates the video command.

### Brief description of the Drawings

The invention will be described in further detail with reference to the accompanying drawings.
Fig. 1 schematically shows a system in which operating elements of an audio mixing console can be used to control a lighting control unit.
Fig. 2 shows a signal flow between the audio mixing unit and the lighting control unit when actuating elements of the audio mixing unit are used to control lighting of a light fixture.
Fig. 3 shows another signal exchange carried out by the system of Fig. 1.
Fig. 4 shows another embodiment of a system in which operating elements of an audio mixing console can be used to control a lighting control unit.
Fig. 5 shows a system in which operating elements of the audio mixing unit are used to control a media server.

### Detailed description

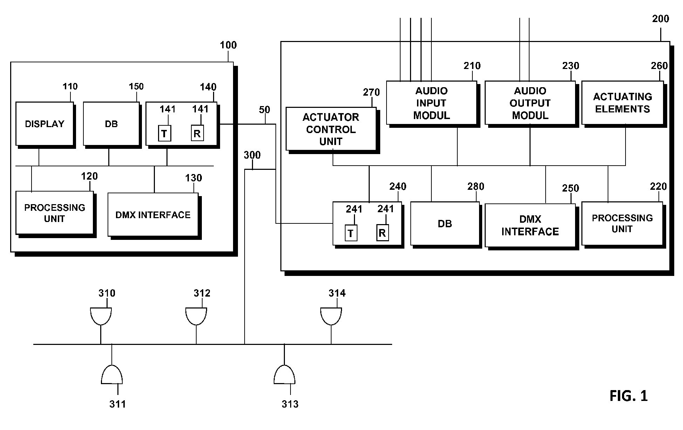

Fig. 1 is a schematic view of a system in which a software- or PC-based lighting control unit is connected to an audio mixing unit. This then allows the audio mixing unit to provide the hardware universe for the light control. With the system shown it is possible to assign the audio mixing unit's actuating elements such as faders and rotating knobs and any other control to the lighting control unit.

The system comprises the lighting control unit 100. The lighting control unit 100 is a personal computer, tablet-based or other processor system controlled device including a dedicated lighting control system and may be a unit where graphical representations of all functions of light fixtures 310 to 314 are used to control the light fixtures 310 to 314. However, the lighting control unit may also have its own at least one operating element as physical entity to control the light fixtures. The light fixtures 310 to 314 are connected to each other via a network 300. The lighting control unit 100 comprises a display 110 where the functional features of the light fixtures 310 to 314 can be displayed, e.g. by displaying faders, buttons or rotating elements. The display 110 can be touch-sensitive, and/or an actuating element such as a mouse (not shown) or a keyboard (not shown) may be used to control the light fixtures 310 to 314. A processing unit 120 can control the operating of the lighting control unit and can control and generate the light control signals and/or light command which are used to directly control the light fixtures 310 to 314.

As will be explained below, the light control signal is the signal that is generated in response to the actuation of an actuating element at an audio mixing unit 200. The light control signal is then interpreted by a light control interface using a light control protocol, e.g. a DMX control protocol provided by DMX interface 130. The DMX interface is a light control interface which generates a command that can be correctly interpreted by the different light fixtures 310 to 314. It should be understood that the DMX interface at the light control unit can be omitted in embodiments where the audio mixing unit comprises a DMX interface generating the light commands for the light fixtures as described below. By way of example, the light control unit does not comprise the DMX interface, for instance when it is embodied as a purely PC-based unit. It should be understood that the system of Fig. 1 is not limited to a DMX interface with a DMX protocol. Other interfaces and protocols such as Art-Net or ACN (Architecture for Control Networks) may be used. The DMX interface 130 is capable of generating signals that comply inter alia with the DMX 512 standard for digital communication networks and which are commonly used to control light fixtures. The lighting control unit 100 comprises a database or storage unit 150 where via click the instructions can be stored which, when carried out by the processing unit, provide the possibility to control the light fixtures. The lighting control unit has an input/output unit 140 which is symbolically shown with a transmitter 141 and a receiver 142 which are used to communicate with the network 300 and the light fixtures. The transmitter 141 and the receiver 142 also connect the lighting control unit 100 to the audio mixing unit 200, the audio mixing unit 200 having an input/output unit 240 with a transmitter 241 and a receiver 242. For a communication with the lighting control unit 100 and with the network 300 and its light fixtures 310 to 314, the connection 50 between the lighting control unit 100 and the audio mixing unit 200 can be a USB connection, an ethernet connection or any other connection, be it a wired or wireless connection, e.g. via Bluetooth. The connection 50 can also be separated from the light fixture network 300.

The audio mixing unit 200 can be a mixing console, such as a digital mixing console and comprises an audio input module 210 where a plurality of audio inputs are provided to receive audio input channels. The received audio input signals may be processed and mixed as desired, e.g. by a processing unit 220 and may be output via an output module 230 where audio output signals can be output. The audio mixing unit furthermore contains a DMX interface 240. As the DMX interface 130, the DMX interface 240 can generate light commands used to control the light fixtures 310 to 314. The audio mixing unit comprises a plurality of actuating elements which are symbolised in Fig. 1 by actuating element 260. As other audio mixing units known in the art, mixing units 200 comprises a plurality of different actuating elements, e.g. faders, rotary knobs, buttons etc. However, the mixing unit 200 may also have one or more touch-sensitive display elements which can also be used in addition to the mechanical actuating elements to control the audio mixing. One or several of the actuating elements may be assigned to the control of the lighting of the light fixtures 310 to 314. This at least one actuating element may be only provided for the control of the light fixtures, however, it is also possible that variable functions can be assigned to the different actuating elements so that one of the actuating elements which is normally used for controlling audio mixing may be used for the control of the light fixtures. An actuator control unit 270 generates an actuator control signal in response to an actuation of one of the actuating elements. As will be explained below, the lighting control unit will generate a light control signal in accordance with the actuator control signal. A database or storage unit 280 can store data needed for the operation of the mixing unit 200.

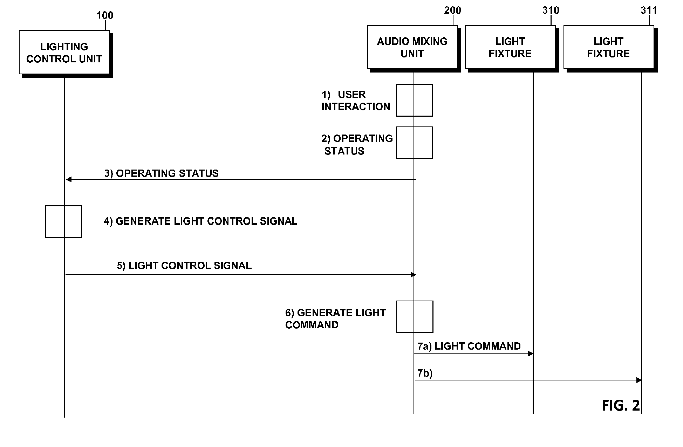

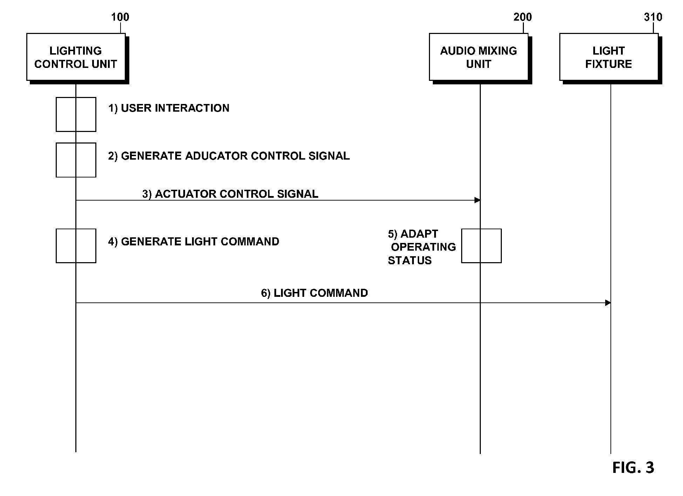

In connection with Figs. 2 and 3, the interaction between unit 100 and unit 200 will be explained in more detail.

In the embodiment of Fig. 2 it is explained how the audio mixing unit can play the role of a sort of a remote control of the lighting control unit.

In step 1 of Fig. 2 the audio mixing unit, especially the processing unit 220 can detect a user interaction in relation with one of the operating elements, namely the operating element that is used to control one of the functions of the light fixtures. To this end, it may be possible that the mixing unit has received either directly from the network 300 or from the lighting control unit 100 data that allow the operating status of the light fixtures or any other function of the light fixtures to be determined, e.g. a tilting angle of the light fixture, the light intensity, the color etc.

Parameters of attached lighting fixtures may be known to the audio mixing unit through transmission of names and current status from the lighting control unit, allowing visual feedback to the operator. This is one setup allowing for a comfortable operation.

However, the name and current status are not necessarily required as the actuation of the audio mixing unit could simply be transferred as a relative up or down change, with the display of the lighting control unit being utilized. In this case the audio haptic control would simply act as control positions of actuating element (e.g. 1, 2, 3, 4)and whatever is currently displayed in the lighting control unit in control positions (1, 2, 3, 4 etc.) is changed by actuation (rotation, fader move, button push). In this case the audio mixing unit does not need to display any corresponding data and requires no knowledge of what it is controlling. It simply sends increase/decrease commands on a specific control position.

When the user has now amended one of the functions or parameters of one or several of the light fixtures 310 to 314, the changed operating status is determined in step 2 by the processing unit 220. In a third step, the information about the change of the operating status is transmitted to the lighting control unit. The change of the operating status can be the movement of a fader, the rotating of a knob, the pressing of a button, the turning on of a light etc. Based on the received operating status, the lighting control unit generates a light control signal in which the parameter or function assigned to the amended actuating element at the audio mixing unit is controlled with the detected amendment. By way of example, if in step 1 of Fig. 2 a user operates an operating element in such a way that the light intensity of one light fixture is increased, this increase is translated or effectuated by the processing unit 120 in the lighting control unit by the generated light control signal. The light control signal is then forwarded to the audio mixing unit where in the DMX interface 250 a light command is generated in step 6. The light command is the command generated in accordance with a light control protocol and which can be correctly interpreted by the at least one light fixture (e.g. increase light intensity, amend position of light fixture, amend color of the light fixture etc.). In steps 7a, 7b, the generated light command or light commands are transmitted to the light fixture or light fixtures. The command may be dedicated to one or several light fixtures and in step 7 the command is transmitted to the light fixture(s) to which the command refers.

In the embodiment of Fig. 2, the light command is generated based on the light control signal at the audio mixing console. In another embodiment, not shown in Fig. 2, the light control signal generated in step 4 is transferred into a light command by the DMX interface 130 and the lighting control unit meaning that step 6 of Fig. 2 is carried out at the lighting control unit. From the lighting control unit the generated light command can then be sent directly to the corresponding light fixture or indirectly via the audio mixing unit to the light fixture.

As mentioned in Fig. 2, the connection between the lighting control unit and the audio mixing unit may be a USB or an ethernet connection or any other connection. The output units at the lighting control unit and the audio mixing unit may have additional interfaces not shown that are able to e.g. transfer signals from the USB standard to the DMX standard and vice versa or from the ethernet standard to DMX or vice versa. Furthermore, wireless connection technologies such as Bluetooth may be used to connect unit 100 to unit 200 and to exchange signals.

In connection with Fig. 3 a further embodiment is shown. In the embodiment of Fig. 3, a user interaction on the screen of the lighting control unit is translated into an actual movement of one of the actuating elements at the audio mixing unit. In step 1 of Fig. 3, a user interaction is detected at the lighting control unit 100. By way of example, using a mouse or the touch screen, the user may amend one of the parameters of the lighting control shown on the display. In step 2, the processing unit 120 generates an actuator control signal which indicates how the virtual actuator was amended. This actuator control signal is transmitted in step 3 to the audio mixing unit. In step 4, the amended actuator position is translated into a light command in the lighting control unit either directly by the DMX interface or indirectly by first generating a light control signal and then generating a light command based on the light control signal. It should be understood that the steps 3 to 6 shown in Fig. 3 need not to be carried out in the described order. It is possible that steps 3 and 4 are carried out at the same time, or that steps 4 and 5 are carried out at the same time or that step 5 relating to the adaptation of the operating status at the audio mixing unit in accordance with the received actuator control signal is carried out before step 4. In step 6, the light command generated by the light control signal is then transmitted to the light fixture 310 to which it relates. In the embodiment of Fig. 3, any amendment of the virtual actuating elements on the display are reflected on the audio mixing console. This means that when a user moves an actuating element on the screen, this movement is carried out by the audio mixing unit automatically without the user touching the corresponding actuating element at the audio mixing unit.

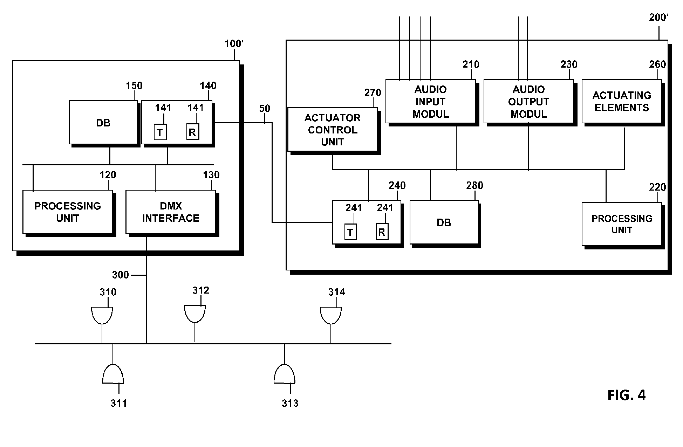

In Fig. 4 another embodiment is shown in which the system includes a lighting control unit 100' and an audio mixing unit 200'. The embodiment shown in Fig. 4 differs from the embodiment shown in Fig. 1 by the fact that the lighting control unit 100' does not comprise a display and that the lighting control unit 100' directly controls the light fixtures 310-314 via DMX interface 130.

The audio mixing unit 200' differs from the audio mixing unit 200 shown in Fig. 1 by the fact that it does not have its own DMX interface. The other functional elements shown in Fig. 4 and contained in the audio mixing unit 100' or the lighting control unit 100 correspond to the elements shown in Fig. 1 and have the same reference numerals. As far as these functional elements are concerned, reference is made to Fig. 1 so that the functioning of the elements shown in Fig. 4 having the same reference numerals as the elements shown in Fig. 1 is not explained in detail anymore. In Fig. 4, the network 300 is indicated to directly connect to the DMX interface 130. However, it should be understood that the communication may be carried out via the input/output unit 140, the direct connection symbolically showing that the light command is generated by DMX interface 130 in the light control unit and not by the audio mixing unit 200'.

In the embodiment of Fig. 4 the lighting control unit is used as a pure calculating unit to generate the light control signal and light command transmitted via the DMX interface 130 to the light fixtures. In the embodiment of Fig. 4 the audio mixing unit cannot generate the light command as it does not have a DMX interface. Here, only the actuating elements of the audio mixing unit are used to control the light fixtures. The audio mixing unit 200' may have a display (not shown in Fig. 4) where the different functions of the light fixtures may be displayed.

In both embodiments shown in Figs. 1 and 4, display elements may be provided in connection with the actuating elements in the audio mixing unit in order to display information related to the function assigned to the corresponding actuating element. The display of the audio mixing unit 200' can also display the light commands available to the actuating elements and which are available to the user to adapt the different functions of the light fixtures 310-314.

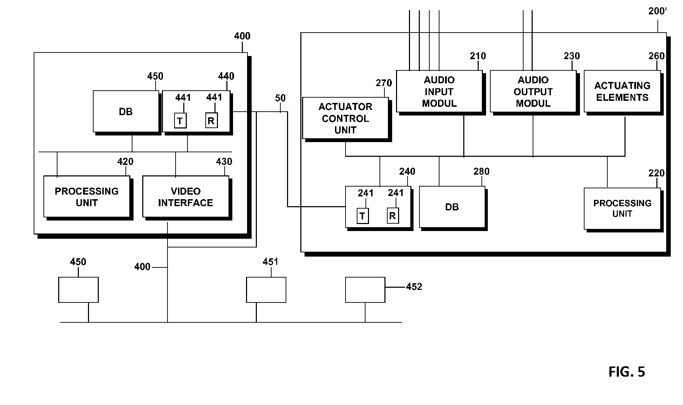

Fig. 5 shows an embodiment in which a media server 400 is controlled by the actuating elements of the audio mixing unit 200'. The media server generates a video command used to control video images shown on different video screens 450 to 452. The video command can be generated based on any video control protocol, such as DVI (Digital Visual Interface) or any other video protocol (VGA, HDMI, Display Port, SDI). The different video screens are connected to each other via network 400. A processing unit 420 controls the operation of the media server. A database 450 or storage unit is provided in which data needed for the operation of the media server can be stored, e.g. computer-readable instructions which, when carried out by the processing unit 420, help to operate the media server. The media server furthermore comprises an input/output unit 440 which includes a transmitter 441 and a receiver 442 which are used for the communication with the video screen network 400 and with the audio mixing unit 200'. The audio mixing unit 200' corresponds to the audio mixing unit discussed above in connection with Figs. 2 and 4 and will not be explained in detail anymore. Similar to the embodiments of Figs. 2 and 4, the actuating elements 260 of the audio mixing unit are used to control the video images to be shown on the different screens 450 to 452. Based on an actuation of one of the actuating elements, the media server generates a video control signal in processing unit 420. The video interface 430 then uses this video control signal and the video control protocol to generate the video command that is used to control the video images on the video screens. By way of example, a movie may be started using the actuating elements of the audio mixing unit or a still image may be selected for reproduction on the video screen by the actuating elements of the audio mixing unit.

In the embodiment of Fig. 5, the media server has the video interface. However, it should be understood that the audio mixing unit may also have a video interface (not shown in Fig. 5). In this embodiment, the audio mixing unit generates the video command for the different video screens.

Summarizing, the present invention has the advantage that the physical actuating elements at the sound mixing unit can be used to control lighting, the lighting control unit providing the software or instructions allowing the adaptation of the different lighting parameters. When an audio mixing unit with a light control interface is provided and when the PC- or software-based lighting control unit or a dedicated embedded hardware/software lighting control unit is provided, there is no need to use an extra dedicated lighting module with actuating elements for the lighting. The actuating elements of the audio mixing unit can be used instead.

It should be understood that each of the features described in the introductory part or the detailed description may be used alone or in context with any of the other features described above.

## Claims

1. A system configured to control a lighting of at least one light fixture (310 to 314), the system comprising:
- an audio mixing unit (200) configured to mix audio signals comprising:
- a plurality of audio inputs for receiving audio input signals,
- at least two audio outputs for outputting mixed audio output signals,
- at least one actuating element (260) provided to control the lighting of the at least one light fixture,
- a first processing unit (220) configured to determine an operating status of the at least one actuating element,
- a lighting control unit (100) configured to generate a light control signal for the at least one light fixture (310 to 314),
wherein the audio mixing unit (200) comprises a first transmitter (241) configured to transmit the determined status of the at least one actuating element (260) to the lighting control unit (100), wherein the lighting control unit (100) is configured to generate the light control signal based on the received operating status of the at least one actuating element at the audio mixing unit, wherein the system comprises a light control interface (130, 250) configured to generate a light command used to control the lighting of the at least one light fixture based on a light control protocol and based on the light control signal.

2. The system according to claim 1, wherein the audio mixing unit (200) comprises the light control interface (250) and the lighting control unit comprises a second transmitter configured to transmit the light control signal to the audio mixing unit.

3. The system according to claim 2, wherein the light control interface (250) is configured to transform the light control signal into the light command in accordance with the light control protocol, the light control interface (250) configured to transmit the light command to the at least one light fixture (310 to 314).

4. The system according to claim 1, wherein the lighting control unit (100) comprises the light control interface (130), wherein the light control interface (130) is configured to transform the light control signal into the light command in accordance with the light control protocol, the light control interface (130) being configured to transmit the light command to the at least one light fixture.

5. The system according to any of the preceding claims, wherein the first and the second transmitter (241, 141) are each configured to transmit USB signals.

6. The system according to any of claims 1 to 4, wherein the first and the second transmitter are each configured to transmit ethernet signals.

7. The system according to any of the preceding claims, wherein the lighting control unit comprises a display (110) and a second processing unit (120), wherein the second processing unit (120) is configured to generate a graphical representation of a virtual actuating element on the display (110), wherein the graphical representation of the virtual actuating element on the display is used to control the lighting of the at least one light fixture (310 to 314) at the lighting control unit (100).

8. The system according to claim 7, wherein the second processing unit (130) is configured to identify an amendment of the graphical representation of the actuating element on the display (110), to generate an actuator control signal based on the amendment of the graphical representation, the second transmitter (141) being configured to transmit the actuator control signal to the audio mixing unit (200), the audio mixing unit (200) comprising an actuator control unit (270) configured to control the at least one actuating element (260), wherein the actuator control unit (270) is configured to amend the operating status of the at least one actuating element (260) based on the received actuator control signal.

9. The system according to any of the preceding claims, wherein the light control interface (130, 250) is configured in such a way that the light command generated based on the light control protocol is a digital multimedia control command

10. The system according to any of claims 7 to 9, wherein the second processing unit (120) of the lighting control unit is configured in such a way that all possible functions of the at least one light fixture are controlled using graphical representations of virtual actuating elements.

11. The system according to any of the preceding claims, wherein the light control interface (130, 250) is configured to generate the light command based on a DMX protocol.

12. A method for controlling, by a system, a lighting of at least one light fixture, the system comprising a audio mixing unit (200) configured to mix audio signal and a lighting control unit (100) configured to generate a light control signal for the at least one light fixture, the method comprising the steps of:
- determining, by the first processing unit (220) of the audio mixing unit (200), an operating status of at least one actuating element (260) of the audio mixing unit provided to control the lighting of the at least one light fixture (310 to 314),
- transmitting the determined operating status of the at least one actuating element to the lighting control unit (100),
- generating, by the lighting control unit (100), the light control signal based on the received operating status of the at least one actuating element at the audio mixing unit,
- generating by the system, a light command, based on the light control signal and based on a light control protocol,
- transmitting the light command to the at least one light fixture.

13. The method according to claim 12, wherein the light control signal is transmitted to the audio mixing unit (200) where the light control signal is transformed into the light command in accordance with the light control protocol, the light command being transmitted from the audio mixing unit to the at least one light fixture.

14. The method according to claim 12, wherein the light control signal is transformed into the light command in accordance with the light control protocol at the lighting control unit (100), the light command being transmitted from the lighting control unit to the at least one light fixture.

15. The method according to any of claims 12 to 14, wherein the lighting control unit (100) comprises a display (110) and a second processing unit (120), wherein the second processing unit (120) is configured to generate a graphical representation of a virtual actuating element on the display, wherein the graphical representation of the virtual actuating element on the display is used to control the lighting of the at least one light fixture at the lighting control unit, further comprising the steps of:
- detecting an amendment of the graphical representation of the actuating element on the display (110) of the lighting control unit (100),
- generating an actuator control signal based on the amendment of the graphical representation,
- transmitting the actuator control signal to the audio mixing unit (200),
- amending, at the audio mixing unit, the status of the actuating element based on the received actuator control signal.

16. A system configured to control a video image of at least one video screen (450-452), the system comprising:
- an audio mixing unit (200) configured to mix audio signals comprising:
- a plurality of audio inputs for receiving audio input signals,
- at least two audio outputs for outputting mixed audio output signals,
- at least one actuating element (260) provided to control the video image of the at least one video screen,
- a first processing unit (220) configured to determine an operating status of the at least one actuating element,
- a media server (400) configured to generate a video control signal for the at least one video screen (450-452),
wherein the audio mixing unit (200) comprises a first transmitter (241) configured to transmit the determined status of the at least one actuating element (260) to the media server, wherein the media server (400) is configured to generate the video control signal based on the received operating status of the at least one actuating element at the audio mixing unit, wherein the system comprises a video interface (430) configured to generate a video command used to control the video image of the at least one video screen based on a video control protocol and based on the video control signal.

17. The system according to claim 16, wherein the audio mixing unit (200) comprises the video interface, the media server comprising a second transmitter configured to transmit the video control signal to the audio mixing unit.

18. The system according to claim 17, wherein the video interface is configured to transform the video control signal into the video command in accordance with the video control protocol, the video interface being configured to transmit the video command to the at least one video screen (450-452).

19. The system according to claim 16, wherein the media server (400) comprises the video interface (430), wherein the video interface (430) is configured to transform the video control signal into the video command in accordance with the video control protocol, the video interface (430) being configured to transmit the video command to the at least one video screen.
